# FASCICULE DE BREVET EUROPEEN

(11) **EP 1 900 052 B1**
(45) Date de publication et mention de la délivrance du brevet: **14.11.2018**
(21) Numéro de dépôt: 06778658.2
(22) Date de dépôt: 23.06.2006
(51) Int. Cl.: H01M 8/0206, H01M 8/2465, H01M 8/0213, H01M 8/0221, H01M 8/0247, H01M 8/0267, H01M 8/04029, H01M 8/2483, H01M 8/2457, H01M 8/04223, H01M 8/04537

(54) **PLAQUE BIPOLAIRE POUR PILE A COMBUSTIBLE COMPORTANT UN LOGEMENT POUR CONNECTEUR DE MESURE**
BRENNSTOFFZELLE-BIPOLARPLATTE MIT EINER BUCHSE FÜR MESSUNGSVERBINDER
BIPOLAR PLATE FOR FUEL CELL COMPRISING A HOUSING FOR MEASURING CONNECTOR

(30) Priorité: 28.06.2005 FR 0506600
(43) Date de publication de la demande: 19.03.2008
(73) Titulaire: PSA Automobiles SA, 78300 Poissy (FR); Commissariat à l'Énergie Atomique et aux Énergies Alternatives, 75015 Paris (FR)
(72) Inventeur: LEMASSON, Damien, 69100 Villeurbanne (FR); GLIPA, Xavier, 91190 Gif Sur Yvette (FR); POIROT-CROUVEZIER, Jean-Philippe, 38450 Saint Georges De Commiers (FR); SCHOTT, Pascal, 38250 Villars De Lans (FR)
(74) Mandataire: Ménès, Catherine
(86) Numéro de dépôt international: PCT/FR2006/001461
(87) Numéro de publication internationale: WO 2007/003744

(56) Documents cités:
- US-A1- 2003 072 983
- US-A1- 2003 215 678
- US-A1- 2004 028 969
- US-B1- 6 410 176

## Description

La présente invention est relative à une plaque bipolaire pour une pile à combustible du type à membrane échangeuse de protons. La plaque bipolaire est constituée de deux demi-plaques bipolaires collées l'une à l'autre, chaque demi-plaque bipolaire étant constituée d'une plaque généralement rectangulaire comportant dans sa partie centrale une zone active, et à sa partie périphérique une pluralité de découpes destinées à constituer des boîtes à fluide, ainsi que des nervures destinées à assurer l'étanchéité.

Une pile à combustible à membrane échangeuse de protons est un dispositif de production d'électricité par réaction électrochimique entre un carburant, par exemple un gaz contenant de l'hydrogène, et un comburant, par exemple un gaz contenant de l'oxygène, séparés par une paroi constituée d'un électrolyte solide. Dans un tel dispositif, lorsque le carburant est du gaz hydrogéné et le comburant du gaz oxygéné, le gaz hydrogéné et le gaz oxygéné réagissent pour former de l'eau tout en générant un courant électrique qui peut être utilisé pour des usages divers.

D'une façon générale, une pile à combustible est constituée d'un empilement de cellules élémentaires constituées chacune d'un ensemble membrane/électrode inséré entre deux plaques bipolaires comportant des canaux destinés à assurer la circulation, d'une part, du carburant, d'autre part, du comburant, et enfin, d'un fluide caloporteur tel que de l'eau. L'ensemble membrane/électrode est un matériau multicouches, connu en lui-même, comprenant une couche constituée de la membrane d'électrolyte solide proprement dite, disposée entre deux couches actives constituant, d'une part, une cathode, d'autre part, une anode, revêtues elles-mêmes de deux couches externes dites couches de diffusion. L'empilement de cellules élémentaires est maintenu serré entre deux plaques terminales bridées par des gougeons s'étendant d'une plaque terminale à l'autre et traversant l'empilement de cellules élémentaires.

Généralement les plaques bipolaires sont réalisées dans des matériaux offrant de bonnes aptitudes de résistance à la corrosion et de conductivité électrique. On connaît par exemple des plaques bipolaires réalisées dans des matériaux carbonés tel que le graphite, un polymère imprégné de graphite, ou les feuilles de graphite souple, mis en forme par usinage ou par moulage. On connaît également des plaques bipolaires réalisées dans des matériaux métalliques tels que des alliages à base de titane, d'aluminium ou à base de fer. Ces plaques bipolaires réalisées en matériau métallique sont en général des plaques mises en forme par emboutissage ou estampage. Dans les plaques bipolaires réalisées à partir de feuilles métalliques mises en forme par emboutissage, l'arrivée des fluides et l'évacuation des sous-produits sont réalisés dans des zones de la plaque bipolaire localement plane, ce qui nécessite l'utilisation d'un cadre ayant une forme adaptée et pouvant servir également à assurer l'étanchéité périphérique de la plaque bipolaire. Cette technique présente l'inconvénient de nécessiter pour une même plaque bipolaire, outre deux demi-plaques bipolaires, une pièce complémentaire destinée à assurer la jonction entre les deux demi-plaques bipolaires et à assurer les alimentations et les évacuations de fluide et de sous-produits. Il en résulte des plaques bipolaires relativement massives.

De telles plaques bipolaires comportent également, à leur périphérie, des pattes qui s'étendent vers l'extérieur et qui sont destinées à connecter à l'aide de pinces crocodile par exemple des appareils de mesure. Ces pattes augmentent l'encombrement des plaques bipolaires et leur coût de fabrication.

Le document US 2003/072983 décrit une plaque bipolaire pour pile à combustible, du type comprenant une demi-plaque bipolaire cathodique et une demi-plaque bipolaire anodique accolées l'une à l'autre, chaque demi-plaque bipolaire étant constituée d'une plaque comportant dans sa partie centrale une zone active et à sa partie périphérique une pluralité de découpes destinées à constituer au moins deux boîtes à comburant, au moins deux boîtes à carburant et au moins deux boîtes à fluide caloporteur, au moins une demi-plaque bipolaire comprenant au moins une liaison entre une découpe périphérique et la zone active, la demi-plaque bipolaire comportant à sa périphérie au moins un logement creux destiné à recevoir un connecteur de mesure électrique.

Le but de la présente invention est de remédier à ces inconvénients en proposant une plaque bipolaire réalisée à partir de plaques métalliques, qui soit plus légère, moins encombrante et plus économique que les plaques connues tout en permettant le branchement d'appareils de mesure.

A cet effet, l'invention a pour objet une plaque bipolaire pour pile à combustible dans laquelle le logement creux peut être constitué par au moins une nervure en saillie vers la face externe d'au moins une demi-plaque bipolaire et s'étendent depuis la périphérie en direction de la zone active de la demi-plaque bipolaire, sans atteindre ni la zone active, ni les découpes destinées à former des boîtes à fluides.

De préférence, le logement creux est constitué par deux nervures en regard l'une de l'autre, prévues dans chacune des demi-plaques bipolaires.

Au moins une demi-plaque bipolaire peut être une plaque métallique par exemple en acier inoxydable et les nervures sont réalisées par exemple par emboutissage ou estampage.

Au moins une plaque bipolaire peut également être réalisée en polymère chargé en graphite expansé, et les nervures peuvent être réalisées par emboutissage, estampage ou moulage.

L'invention concerne également une pile à combustible du type comprenant au moins une cellule constituée d'un assemblage membrane/électrode comprenant au moins une plaque bipolaire.

L'invention va maintenant être décrite plus en détail mais de façon non limitative en regard des figures annexées dans laquelle :
- la figure 1 est une vue de face d'une plaque bipolaire ;

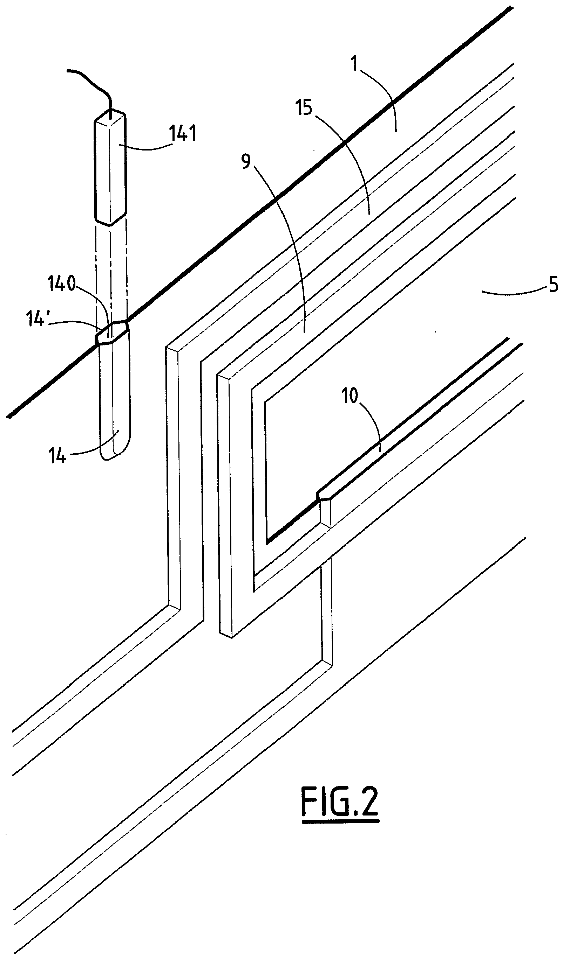

- la figure 2 est une vue en perspective agrandie d'une plaque bipolaire comportant un connecteur femelle pour un appareil de mesure électrique.

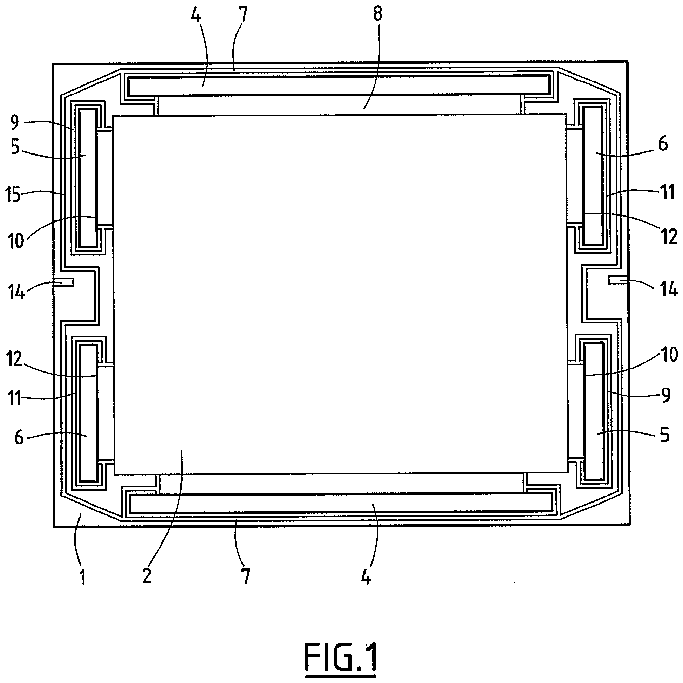

La plaque bipolaire représentée à la figure 1, et dont on ne voit qu'une seule face, est constituée d'une demi-plaque bipolaire 1 cathodique ou anodique, et d'une demi-plaque bipolaire anodique ou cathodique, respectivement, les deux demi-plaques étant accolées l'une contre l'autre par leurs faces internes. Les deux demi-plaques sont constituées chacune d'une plaque métallique par exemple en acier inoxydable. La partie centrale 2 de chaque demi-plaque bipolaire, constitue une zone active, et comporte un réseau de nervures 3 destiné à assurer une bonne répartition de l'écoulement des fluides sur les surfaces externes de chaque demi-plaque bipolaire, ainsi que du fluide caloporteur entre les deux demi-plaque bipolaires. A leurs périphéries, les deux demi-plaques bipolaires comportent des découpes 4, 5, 6 destinées à réaliser des boîtes à fluide pour l'alimentation et l'évacuation des différents fluides nécessaires au fonctionnement de la pile.

En particulier à la partie supérieure et à la partie inférieure (tel que représenté sur la figure), les plaques bipolaires comportent des découpes 4 pour la demi-plaque bipolaire 1 et des découpes correspondantes pour la deuxième demi-plaque bipolaire, destinées à constituer les boîtes à fluide caloporteur. La découpe de la partie supérieure est par exemple destinée à réaliser la boîte d'alimentation en fluide caloporteur, et la découpe inférieure est destinée à réaliser la boîte d'évacuation du fluide caloporteur. Sur les deux bords latéraux, les demi-plaques bipolaires comportent des découpes 5 et 6, également généralement allongées et destinées à réaliser d'une part les boîtes d'alimentation et d'évacuation du comburant, et d'autre part des boîtes d'alimentation et d'évacuation du carburant.

Les découpes 4 destinées à réaliser les boîtes à fluide caloporteur, sont entourées par des nervures 7 en saillie sur la surface externe de chacune des demi-plaques bipolaires, destinées à assurer l'étanchéité. Sur leur bordure orientée vers la zone active 2, les découpes 4 comportent également une liaison 8 permettant la communication entre l'intérieur des boîtes à fluide caloporteur et l'espace situé entre les deux demi-plaques bipolaires et laissé libre dans le réseau de nervure. En effet, le fluide caloporteur est destiné à circuler dans l'espace situé entre les deux demi-plaques bipolaires. Il doit donc entrer par l'une des boîtes de fluide caloporteur, puis circuler entre les deux plaques, et enfin être évacué par une deuxième boîte à fluide caloporteur.

De la même façon, les découpes destinées à former des boîtes à comburant 5 ou à carburant 6 sont entourées d'une part de nervures 9 et 11 respectivement destinées à assurer l'étanchéité, et d'autre part de liaisons 10 et 12 respectivement destinées à assurer la communication entre les boîtes d'amenée et d'évacuation du comburant ou du carburant, et les surfaces externes de la plaque bipolaire. En effet, les comburants ou carburants doivent circuler entre les faces externes des plaques bipolaires et les assemblages membrane électrodes interposés entre deux plaques bipolaires successives ; le comburant circulant sur la face externe de la demi-plaque bipolaire cathodique, et le carburant sur la face externe de la demi-plaque bipolaire anodique.

Les nervures destinées à assurer la communication entre les boîtes à comburant ou carburant et les faces externes des plaques bipolaires, sont des nervures qui d'une part débouchent à l'intérieur des boîtes à comburant ou carburant, et d'autre part débouchent à l'autre extrémité par l'intermédiaire d'une ouverture prévue dans la demi-plaque bipolaire adaptée, l'une, correspondant au comburant sur la face externe de la demi-plaque bipolaire cathodique, et l'autre, correspondant au carburant, sur la face externe de la demi-plaque anodique.

La plaque bipolaire comporte à sa périphérie des découpes circulaires, destinées à faire passer des gougeons de fixation de l'empilement de cellules élémentaires de la pile à combustible, ainsi que des petites nervures 14, 14' ne débouchant qu'à l'extérieur des plaques bipolaires, et formant un logement creux 140 qui constitue un connecteur femelle destiné à recevoir par exemple un connecteur 141 d'un appareil de mesure électrique. De tels connecteurs peuvent être disposés en différents points de la périphérie de la plaque bipolaire et leur nombre dépend des besoins particuliers.

## Revendications

1. Plaque bipolaire pour pile à combustible, du type comprenant une demi-plaque bipolaire cathodique et une demi-plaque bipolaire anodique accolées l'une à l'autre, chaque demi-plaque bipolaire (1) étant constituée d'une plaque comportant dans sa partie centrale une zone active (2) et à sa partie périphérique une pluralité de découpes (4, 5, 6) destinées à constituer au moins deux boîtes à comburant, au moins deux boîtes à carburant et au moins deux boîtes à fluide caloporteur, au moins une demi-plaque bipolaire (1) comprenant au moins une liaison (8, 10, 12) entre une découpe périphérique (4, 5, 6) et la zone active (2) et à sa périphérie au moins un logement creux (140), et le logement creux (140) est constitué par au moins une nervure (14) en saillie vers la face externe d'au moins une demi-plaque bipolaire (1) et s'étendant depuis la périphérie en direction de la zone active de la demi-plaque bipolaire, sans atteindre ni la zone active (2), ni les découpes destinées à former des boîtes à fluide.

2. Plaque bipolaire selon la revendication 1, **caractérisée** en ce le logement creux (140) est constitué par deux nervures (14, 14') en regard l'une de l'autre, prévues dans chacune des demi-plaques bipolaires.

3. Plaque bipolaire selon l'une quelconque des revendications 1 ou 2, **caractérisée en ce que** au moins une demi-plaque bipolaire (1) est une plaque métallique et **en ce que** les nervures (14) sont réalisées par emboutissage ou estampage.

4. Plaque bipolaire selon l'une quelconque des revendications 1 ou 2, **caractérisée en ce que** au moins une demi-plaque bipolaire (1) est une plaque réalisée en polymère chargé ou en graphite expansé et **en ce que** les nervures sont réalisées par emboutissage, estampage ou moulage.

5. Pile à combustible du type comprenant au moins une cellule constituée d'un assemblage membrane/électrode comprenant au moins une plaque bipolaire, **caractérisée en ce que** la plaque bipolaire est conforme à l'une quelconque des revendications 1 à 4.

## Patentansprüche

1. Bipolarplatte für Brennstoffzelle vom Typ, der eine halbe kathodische Bipolarplatte und eine halbe anodische Bipolarplatte, die aneinandergefügt sind, umfasst, wobei jede halbe Bipolarplatte (1) aus einer Platte besteht, die in ihrem zentralen Teil eine aktive Zone (2) umfasst und an ihrem umfänglichen Teil eine Mehrzahl von Ausschnitten (4, 5, 6), die dazu bestimmt sind, mindestens zwei Verbrennungsförderergehäuse und mindestens zwei Kühlmittelgehäuse zu bilden, wobei mindestens eine halbe Bipolarplatte (1) mindestens eine Verbindung (8, 10, 12) zwischen einem umfänglichen Ausschnitt (4, 5, 6) und der aktiven Zone (2) umfasst und an ihrem Umfang mindestens eine hohle Aufnahme (140), und dass die hohle Aufnahme (140) aus mindestens einer Rippe (14) besteht, die zu der Außenseite mindestens einer halben Bipolarplatte (1) vorsteht und sich von dem Umfang in Richtung der aktiven Zone der halben Bipolarplatte erstreckt, ohne weder die aktive Zone (2) noch die Ausschnitte, die dazu bestimmt sind, Fluidgehäuse zu bilden, zu erreichen.

2. Bipolarplatte nach Anspruch 1, **dadurch gekennzeichnet, dass** die hohle Aufnahme (140) aus zwei Rippen (14, 14'), die einander gegenüberliegen, besteht, die in jeder der halben Bipolarplatten vorgesehen sind.

3. Bipolarplatte nach einem der Ansprüche 1 oder 2, **dadurch gekennzeichnet, dass** mindestens eine halbe Bipolarplatte (1) metallisch ist, und dass die Rippen (14) durch Stanzen oder Prägen gebildet sind.

4. Bipolarplatte nach einem der Ansprüche 1 oder 2, **dadurch gekennzeichnet, dass** mindestens eine Bipolarplatte (1) eine Platte ist, die aus einem Polymer mit Füllstoff oder aus expandiertem Graphit hergestellt ist, und dass die Rippen durch Stanzen, Prägen oder Formen gebildet sind.

5. Brennstoffzelle vom Typ, der mindestens eine Zelle umfasst, die aus einer Anordnungsmembran/Elektrode besteht, die mindestens eine Bipolarplatte umfasst, **dadurch gekennzeichnet, dass** die Bipolarplatte einem der Ansprüche 1 bis 4 entspricht.

## Claims

1. A bipolar plate for a fuel cell, of the type including a cathode bipolar half-plate and an anode bipolar half-plate attached to each other, each bipolar half-plate (1) being constituted by a plate comprising in its central part an active region (2) and at its peripheral part a plurality of cut-outs (4, 5, 6) intended to constitute at least two oxidant boxes, at least two fuel boxes and at least two coolant boxes, at least one bipolar half-plate (1) including at least one connection (8, 10, 12) between a peripheral cutout (4, 5, 6) and the active region (2) and at its periphery at least one hollow housing (140), and the hollow housing (140) is constituted by at least one rib (14) projecting towards the external face of at least one bipolar half-plate (1) and extending from the periphery in the direction of the active region of the bipolar half-plate, without reaching either the active region (2) or the cut-outs intended to form fluid boxes.

2. The bipolar plate according to Claim 1, **characterized in that** the hollow housing (140) is constituted by two ribs (14, 14') facing one another, provided in each of the bipolar half-plates.

3. The bipolar plate according to any one of Claims 1 or 2, **characterized in that** at least one bipolar half-plate (1) is a metallic plate and **in that** the ribs (14) are formed by drawing or stamping.

4. The bipolar plate according to any one of Claims 1 or 2, **characterized in that** at least one bipolar half-plate (1) is a plate made from charged polymer or from expanded graphite and **in that** the ribs are formed by drawing, stamping or moulding.

5. A fuel cell of the type including at least one cell constituted by a membrane/electrode assembly including at least one bipolar plate, **characterized in that** the bipolar plate is in accordance with any one of Claims 1 to 4.
